# EUROPEAN PATENT APPLICATION

(11) **EP 4 597 930 A1**
(43) Date of publication of application: **06.08.2025**
(21) Application number: 24154706.6
(22) Date of filing: 30.01.2024
(51) Int. Cl.: H04L 9/40, H04L 9/08, H04L 9/32

(54) **METHOD OF PROVIDING A KEM-BASED SERVICE TO A CLIENT DEVICE BY A SERVICE PROVIDER DEVICE, SERVICE PROVIDER DEVICE, CLIENT DEVICE, SYSTEM, COMPUTER PROGRAM AND STORAGE MEDIUM**

(71) Applicant: Siemens Aktiengesellschaft, 80333 München (DE)
(72) Inventor: Aghaie, Anita, 81379 Munich (DE); Che, Kai, 80636 München (DE); De Santis, Fabrizio, 80634 München (DE); Falk, Rainer, 85435 Erding (DE); Furch, Andreas, 85354 Freising (DE); Safieh, Malek, 81539 München (DE); Schneider, Daniel, 80796 München (DE); Vaira, Antonio, 81379 München (DE); Zeschg, Thomas, 81543 München (DE); Zwanzger, Johannes, 85579 Neubiberg (DE)
(74) Representative: Siemens Patent Attorneys

(57) **Abstract**

The invention relates to a method of providing a KEM-based service to a client device (2) by a service provider device (1), the method comprising the following steps: encapsulating a shared secret (4) using a public key of the client device (5) by the service provider device (1); first transmission of a first message (7) from the service provider device (1) to the client device (2); decapsulating the encapsulated shared secret (6) using a KEM private key of the client device (8) corresponding to the public key of the client device (5) by the client device (2).

## Description

The invention is concerned with a method of providing a KEM-based service to a client device by a service provider device, a service provider device, a client device, a system, a computer program and a storage medium.

The specific technical problem is a use of X.509v3 or C509 public key certificate based key encapsulation mechanisms (KEMs) in environments where all system components support KEM, but where constrained client devices support only digital signature validation in contrast to server devices that also support digital signature generation. This is a new problem that came up with the advent of post-quantum cryptography, where cryptographic algorithms do not always support each cryptographic use case in the same efficient way, which in turn makes certain new combinations of algorithms and even algorithm types valuable.

Prior art includes solutions that may directly use KEMTLS instead of TLS1.3 but that accordingly restrict security to the data when in transit. Other prior art mainly uses KEM-based key exchange.

KEMTLS is a communication protocol closely aligned with TLS 1.3 using KEM-based techniques for authentication and key exchange. KEMTLS is described in Schwabe et al 2020 (Schwabe, P., Stebila, D., Wiggers, T.: Post-quantum TLS without handshake signatures. In: Ligatti, J., Ou, X., Katz, J., Vigna, G. (eds.) ACM CCS 20: 27th Conference on Computer and Communications Security. pp. 1461-1480. ACM Press, Virtual Event, USA (Nov 9-13, 2020)).

Hermelink et al. (2020) (Hermelink, Julius, et al. Quantum safe authenticated key exchange protocol for automotive application. Ruhr-Universitat Bochum, 2020) describes an instantiation of a quantum-safe security protocol for authenticated key establishment (AKE) with forward secrecy.

Krawczyk et al. 2016 (Krawczyk, Hugo, and Hoeteck Wee. "The OPTLS protocol and TLS 1.3." 2016 IEEE European Symposium on Security and Privacy (EuroS&P). IEEE, 2016.) describes the OPTLS protocol.

The document IETF RFC9180 Hybrid Public Key Encryption describes a scheme for hybrid public key encryption (HPKE). This scheme provides a variant of public key encryption of plaintexts for a recipient public key using a KEM, KDF, and an AEAD scheme (AEAD: authenticated encryption with associated data). It also includes two authenticated variants that authenticates possession of a KEM private key.

Güneysu et al. 2022 (Güneysu, Tim, et al. "Proof-of-possession for KEM certificates using verifiable generation." Proceedings of the 2022 ACM SIGSAC Conference on Computer and Communications Security. 2022.) achieves proof of (private key) possession in the context of KEM X.509v3 certificate management with a solution inspired by the Picnic signature scheme and using a multi-party-computation-in-the head paradigm. Its main goal is to achieve a non-interactive setting.

EP 4 255 004 A1 discloses a method for secure onboarding against quantum computer attacks for an loT device from a manufacturer in a customer's infrastructure using a first server in a manufacturer's manufacturer domain and a second server in a customer's customer domain proposed, in which a device certificate of the customer domain for the loT device is provided on the loT device using three authenticated and encrypted communication channels and a key encapsulation method.

It is an objective of the present invention to allow a use of X.509v3 or C509 public key certificate based key encapsulation mechanisms (KEMs) in environments comprising client devices that support only digital signature validation.

It is another objective of the present invention to provide a solution to the object above allowing object-bound security, wherein data used shall best still be protected after it was processed using a (secure) communication channel.

These objectives are achieved by the respective subject matter of the independent claims. Further implementations and preferred embodiments are subject matter of the dependent claims.

A first aspect of the present invention is related to a method of providing a KEM-based service to a client device by a service provider device.

The method comprises the following steps.

A step of the method comprises a generation of a service identifier assigned to the KEM-based service by the service provider device. In other words, the service provider device providing the KEM-based service, generates the service identifier that identifies the KEM-based service. The identifier may also include device identifiers and other parameters related to the service.

A next step of the method comprises a generation of a shared secret by the service provider device. In other words, the service provider device generates the shared secret. The shared secret may be a random value generated using a random number generator.

A next step of the method comprises an encapsulation of the shared secret using a public key of the client device by the service provider device. In other words, the public key of the client device is used by the service provider device to encapsulate the shared secret. The encapsulated secret may also be called ciphertext. The generation of the shared secret and the random value may be realized together by a KEM key encapsulation function. The random number generation may then be a subfunction of the KEM key encapsulation function. For example the KEM key encapsulation function may be encaps(client public key) = (shared secret, ciphertext), meaning that the shared secret and the ciphertext are both outputs of the encapsulation function. The ciphertext may be given to the client device. The client may then compute the shared secret using a command shared secret = decaps(ciphertext, client device KEM private key). The KEM public key of the client device corresponds to a KEM private key of the client device. The KEM private key of the client device is used to decapsulate the encapsulated shared secret, encapsulated by the KEM public key of the client device. Several session keys may be derived from the shared secret by both entities correspondingly.

The method comprises a first transmission of a first message from the service provider device to the client device according to a first authenticated transmission procedure. The first message comprises the encapsulated shared secret and the service identifier. In other words, the service provider device generates the first message comprising the encapsulated shared secret and the service identifier. The service provider device sends the first message to the client device. The transmission of the first message is performed according to the first authenticated transmission procedure. The first authenticated transmission procedure allows an authenticated transmission of the first message from the service provider device to the client device.

A next step comprises a decapsulation of the encapsulated shared secret using the KEM private key of the client device corresponding to the KEM public key of the client device by the client device. In other words, the client device gets the shared secret by decapsulating the encapsulated shared secret using the KEM private key of the client device. Therefore, only the client device having the KEM private key of the client device corresponding to the KEM public key of the client device used to encapsulate the shared secret can acquire the shared secret. In other words, the encapsulation is done with the KEM public key.

The decapsulation is done with the corresponding KEM private key. The both operations may result in the same shared secret which may then be used to derive symmetric private keys, only if the decapsulation is done with the KEM private key that corresponds to the KEM public key used for the encapsulation.

A next step comprises a generation of a nonce by the client device. The nonce is to be understood in the sense of a cryptographic nonce. The nonce is an arbitrary number and may be a counter number or a random number generated using a cryptographically secure pseudorandom number generator (CSPRNG). A main aim of this nonce is to obtain a freshness property, which is typically used to avoid replay attacks. The nonce may be used a freshness value. The nonce may be a nunce, a counter value, a random number/nonce or a timestamp.

A next step comprises a generation of a service request corresponding to the service identifier by the client device.

In a next step of the method, the client device calculates an authentication feature for authenticating the nonce, the service request and the service identifier. The authentication feature depends on the shared secret. To allow a verification of the content of the second message by the service provider device, the client device calculates the authentication feature. The authentication feature allows a verification of the nonce, the service request, and the service identifier by the service provider device. The authentication feature depends on the shared secret. In other words, the authentication feature is calculated based on the shared secret.

A next step comprises a second transmission of a second message from the client device to the service provider device according to the second authenticated transmission procedure. The second message comprises the authentication feature, the nonce, the service request and the service identifier.

In a next step, the authentication feature is verified by the service provider device, using the shared secret. In other words the service provider device verifies the authentication feature. As the authentication feature is calculated based on the shared secret, the service provider device can verify that the client device has the KEM private key of the client device corresponding to the KEM public key of the client device used by the service provider device to encapsulate the shared secret. This verification is also known as a proof of KEM private key possession. This step may also include an authentication of the client device to the service provider device.

In a next step, the service provider device processes the service request and generates a corresponding response. The response comprises the encapsulated shared secret, the nonce and the authentication feature. The processing of the service request may comprise a generation of requested data to be sent to the client device in a third message.

A next step comprises a generation of a response digital signature, signing the response using a signature private key of the service provider device by the service provider device. In other words, the service provider device generates the response digital signature related to the response wherein the response is digitally signed with the signature private key of the service provider device. The response digital signature allows a verification of the response using the signature public key of the service provider device corresponding to the signature private key of the service provider device. This step enables the client device to authenticate the service provider device.

A next step comprises a third transmission of the third message from the service provider device to the client device according to a third authenticated transmission procedure. The third message comprises the response and the response digital signature.

The client device verifies the response digital signature of the response using the signature public key of the service provider device corresponding to the signature private key of the service provider device.

In a next step, the client device checks the encapsulated shared secret, the nonce and the authentication feature of the response. A successful check requires, that the encapsulated shared secret, the nonce and the authentication feature of the third message correspond to the encapsulated shared secret, the nonce and the authentication feature stored in the client device.

In a next step, the client device processes the response. The processing of the response may for example be a storing of data provided by the response. The processing may also be a software update as an example.

According to a further embodiment of the invention, the first transmission of the first message according to the first authenticated transmission procedure comprises the following steps.

A first step of the first authenticated transmission procedure comprises a generation of a initial digital signature, signing the encapsulated shared secret and the service identifier using the signature private key of the service provider device by the service provider device. In other words, the service provider device generates the initial digital signature to sign the encapsulated shared secret and the service identifier provided in the first message using the signature private key of the service provider device. Therefore, the client device can verify that the encapsulated shared secret and the service identifier are provided by the service provider device by verifying the first signature using the signature public key of the service provider device. This extension may find applications that aim on avoiding denial of service attacks targeted on the client device.

In a next step of the first authenticated transmission procedure, the service provider device sends the first message to the client device. The first message also comprises the initial digital signature.

In other words, the first message comprises the service identifier, the encapsulated shared secret and the initial digital signature.

In a next step, the client device receives the first message.

In a next step, the client device verifies the initial digital signature using the signature public key of the service provider device. In other words, the client device verifies the initial digital signature using the signature public key of the service provider device corresponding to the signature private key of the service provider device used to generate the initial digital signature.

According to a further embodiment of the invention, the authentication feature is a hash value of the shared secret, the nonce, the service request and the service identifier. In other words, the shared secret, the nonce, the service request and the service identifier are inputs used to generate the hash value. Therefore, to verify the hash value, it is necessary for the receiver to calculate the hash value of the shared secret, the nonce, the service request and the service identifier and to compare that calculated hash value with the hash value of the second message. When the service provider device verifies the hash value, the service provider device verifies that the client device has the shared secret.

According to a further embodiment of the invention, the authentication feature is a keyed hash message authentication code of the nonce, the service request and the service identifier, based on the shared secret. In other words, the keyed hash message authentication code is generated for the nonce, the service request and the service identifier using the shared secret.

According to a further embodiment of the invention, the authentication feature is an authentication tag of the nonce, the service request and the service identifier using an AEAD scheme based on the shared secret.

According to a further embodiment of the invention, the first authenticated transmission procedure and/or the second authenticated transmission procedure and/or the third authenticated transmission procedure is configured as a KEMTLS transmission procedure. In other words the transmission of the respective message is performed using a channel secured by KEMTLS.

According to a further embodiment of the invention, the first authenticated transmission procedure and/or the second authenticated transmission procedure and/or the third authenticated transmission procedure is configured as a KEM/TEM transmission procedure using a second shared secret. DEM is a data encapsulation mechanism.

According to a further embodiment of the invention, the method comprises a transmission of an initial request message from the client device to the service provider device. In other words, the client device sends the initial request message comprising a request to provide the service to the client device. The service provider device receives the initial request message and generates the service identifier assigned to the KEM-based service. The transmission of the initial request message may be initiated by a trigger, by a timing or by a specific device state.

According to a further embodiment of the invention, the generation of the service identifier assigned to the KEM-based service is initiated by the service provider device.

For use cases or use situations which may arise in the methods and which are not explicitly described here, it may be provided that, in accordance with the methods, an error message and/or a prompt for user feedback is output and/or a default setting and/or a predetermined initial state is set.

A second aspect of the invention is related to a service provider device. The service provider device is configured to generate a service identifier assigned to a KEM-based service. The service provider device is configured to generate a shared secret and to encapsulate the shared secret using a KEM public key of the client device. The service provider device is configured to send a first message to the client device according to a first authenticated transmission procedure, wherein the first message comprises the encapsulated shared secret and the service identifier.

The service provider device is configured to receive a second message from the client device according to a second authenticated transmission procedure, wherein the second message comprises an authentication feature, a nonce, a service request and the service identifier provided by the service provider device. The service provider device is configured to verify the authentication feature using the shared secret, to process the service request of the second message and to generate a corresponding response. The response comprises the encapsulated shared secret, the nonce and the authentication feature. The service provider device is configured to generate a response digital signature signing the response using a signature private key of the service provider device. The service provider device is configured to send a third message to the client device according to a third authenticated transmission procedure, wherein the third message comprises the response and the second signature.

A third aspect of the invention is related to a client device. The client device is configured to receive a first message from a service provider device according to a first authenticated transmission procedure, wherein the first message comprises an encapsulated shared secret and a service identifier. The client device is configured to decapsulate the encapsulated shared secret using a KEM private key of the client device corresponding to a KEM public key of the client device used to encapsulate the shared secret. The client device is configured to generate a nonce and a service request corresponding to the service identifier. The client device is configured to calculate an authentication feature for authenticating the nonce, the service request and the service identifier wherein the authentication feature depends on the shared secret. The client device is configured to send a second message to the service provider device according to a second authenticated transmission procedure wherein the second message comprises the authentication feature, the nonce, the service request and the service identifier.

The client device is configured to receive a third message from the service provider device according to a third authenticated transmission procedure wherein the third message comprises the response and a response digital signature. The client device is configured to verify the response digital signature using a signature public key of the service provider device corresponding to the signature private key of the service provider device used to generate the response digital signature. The client device is configured to check the encapsulated shared secret, the nonce and the hash of the response. The client device is configured to process the response.

A fourth aspect of the invention is related to a system comprising a service provider device according to the second aspect of the invention and a client device according to the third aspect of the invention.

The service provider device and the client device may comprise computing devices to perform steps of the methods.

A computing device may in particular be understood as a data processing device, which comprises processing circuitry. The computing device may therefore in particular process data to perform computing operations. This may also include operations to perform indexed accesses to a data structure, for example a look-up table, LUT.

In particular, the computing device may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing device may also include one or more processors, for example one or more microprocessors, one or more central processing devices, CPU, one or more graphics processing devices, GPU, and/or one or more signal processors, in particular one or more digital signal processors, DSP. The computing device may also include a physical or a virtual cluster of computers or other of said devices.

In various embodiments, the computing device includes one or more hardware and/or software interfaces and/or one or more memory devices.

A memory device may be implemented as a volatile data memory, for example a dynamic random access memory, DRAM, or a static random access memory, SRAM, or as a non-volatile data memory, for example a read-only memory, ROM, a programmable read-only memory, PROM, an erasable read-only memory, EPROM, an electrically erasable read-only memory, EEPROM, a flash memory or flash EEPROM, a ferroelectric random access memory, FRAM, a magnetoresistive random access memory, MRAM, or a phase-change random access memory, PCRAM.

A fifth aspect of the invention relates to a computer program comprising instructions which, when executed by a service provider device, cause the service provider device to carry out the steps of the method performed by the service provider device and/or which, when executed by a client device, cause the client device to carry out the steps of the method performed by the client device. The computer program can be made for being executed on the above-mentioned client device and/or the above mentioned service provider device. The computer program can for example be loaded into the memory unit of the computation unit and be executed by the computation unit.

A sixth aspect of the present invention relates to a computer-readable medium comprising instructions which, when executed by a service provider device, cause the service provider device to carry out the steps of the method performed by the service provider device and/or which, when executed by a client device, cause the client device to carry out the steps of the method performed by the client device. The computer-readable medium may be a permanent or a non-permanent memory. An example for non-permanent memory is random access memory (RAM). Examples for permanent memory are optical storage mediums, for example CD or DVD, hard discs, solid state discs, memory cards and the like.

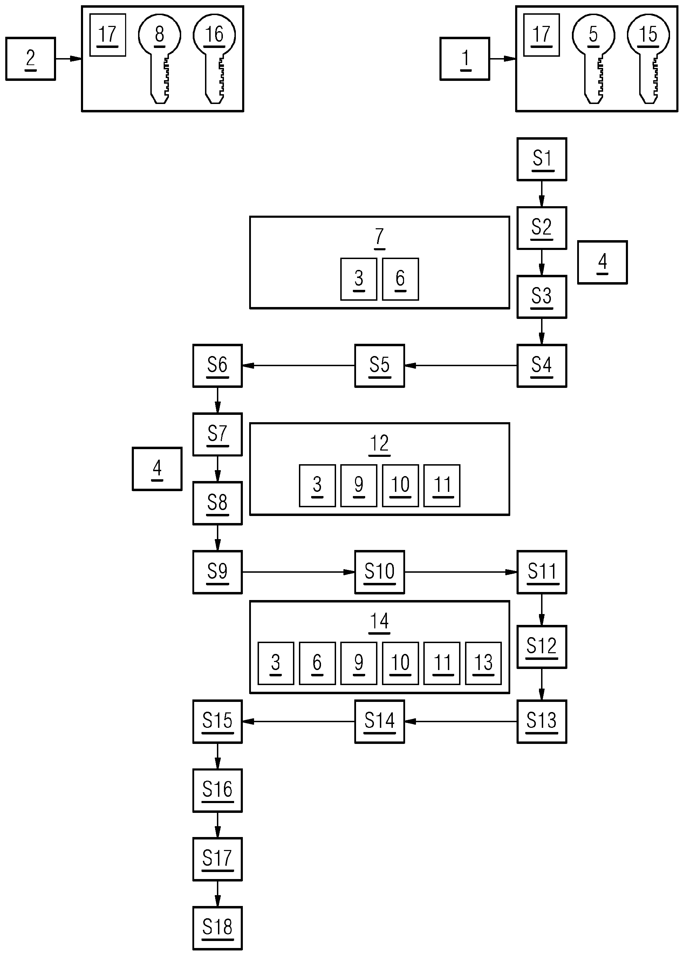

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, are also comprised by the invention. Moreover, embodiments and combinations of features which go beyond or deviate from the combinations of features set forth in the recitations of the claims are comprised by the invention.

Independent of the grammatical term usage, individuals with male, female or other gender identities are included within the term.

In the following, the invention will be explained in detail with reference to specific exemplary implementations and respective schematic drawing. In the drawing, identical or functionally identical elements may be denoted by the same reference signs.

FIG. shows a schematic illustration of a method of providing a KEM-based service to a client device by a service provider device.

The service provider device 1 and the client device 2 may comprise respective computing devices 17.

To make the generic service request 10/response 13 specification above a bit clearer, the following additionally describes the main part of the approach as a sequence of steps for a specific instantiation of a certificate renewal service, as an example. Note that the example assumes that confidentiality of communicated data and privacy of involved parties is not required.

In a step S1 the service provider device 1 may initiate the method.

The service provider device 1 may know that the client device 2 needs a specific KEM-based service that may be provided by the service provider device 1. As an example the service provider device 1 may initiate the method, triggered by a watchdog module of the service provider device 1 or after receiving an initial request from the client device 2.

Following a concrete example, related to a renewal of a certificate of the client device 2, the service provider device 1 may detect, based on its local time and a certificate validity information, that the client device 2 needs a certificate renewal.

In a step S2 the service provider device 1 may generate a service identifier 3 assigned to the KEM-based service. The KEM-based service may be related to a provision of a new certificate. The service identifier 3 may be "CertRenew", representing the certificate renewal service provided by the service provider device 1. The service identifier 3 may include further information regarding the service like the issuer, subject and serial number of the certificate in question.

In a step S3 the service provider device 1 may generate a shared secret 4. The shared secret 4 may be essentially used as a random challenge.

In a step S4 the service provider device 1 may encapsulate the shared secret 4 using a KEM public key of the client device 5. Steos S3 and step S4 may be executed within one function, the encapsulation function.

The service provider device 1 may generate an encapsulated shared secret 6 as a corresponding ciphertext by using a KEM encapsulation function based on the KEM public key of the client device 5 for the client device 2 that needs/requests the KEM-based service. Thereby the KEM public key of the client device 5 may originate from a KEM public key certificate that was previously validated by the service provider device 1.

Step S5 may comprise a first transmission of a first message 7 from the service provider device 1 to the client device 2 according to a first authenticated transmission procedure. The first message 7 may comprise the encapsulated shared secret 6 and the service identifier 3.

The service provider device 1 may send the ciphertext output of the encapsulation function to the client device 2 together with the service identifier 3 corresponding to the specific KEM-based service mentioned before whereby the whole payload data may be authenticated by the service provider device 1, e.g., by digitally signing the payload, or by using a, e.g., KEMTLS secured communication channel, or by using a DEM that may suit to the KEM, using another, independent shared secret 4 that could be either pre-shared or generated on the fly.

The client device 2 may validate the first message 7 received from the service provider device 1 and may particularly verify the authentication data based on public key certificate validation.

The peer may check the digital signature of the first message 7 sent by the service provider device 1.

In a step S6 the client device 2 may decapsulate the encapsulated shared secret 6 using a KEM private key of the client device 8 corresponding to the KEM public key of the client device 5.

If the message can be successfully validated, the client device 2 may decapsulate the included ciphertext using the KEM private key of the client device 8, which may provide the service provider device 1 generated shared secret 4 used as random challenge.

In a step S7 the client device 2 may generate a random nonce 9 to protect itself against replay of old service responses 13.

In a step S8 the client device 2 may generate a service request 10 corresponding to the service identifier 3. According to the service ID "CertRenew" the client device 2 may generate a new key pair and a certificate signing request to allow a renewal.

In a step S9 the client device 2 may calculate an authentication feature 11 for authenticating the nonce, the service request 10, and the service identifier 3. The authentication feature 11 may depend on the shared secret 4.

The client device 2 may authenticate a following second message 12 for the service provider device 1 using the decapsulated ciphertext.

The client device 2 may transform the service request 10 together e.g., concatenated with the service identifier 3, the shared secret 4 sent by the service provider device 1 and the random nonce 9 generated by the client device 2, into the authentication feature 11 designed as a hash value by using a cryptographic hash function in a secure way for this kind of use case.

The client device 2 may use an HMAC construction to transform the service request 10 previously concatenated with the service identifier 3 and the random nonce 9 into the authentication feature 11 designed as a MAC based on the shared secret 4.

The client device 2 may use an AEAD construction without encryption, i.e., just computing the authentication feature 11 designed as an authentication tag for the service request 10 previously concatenated with the service identifier 3 and the random nonce 9 by using the shared secret 4 as base for the AEAD scheme.

The client device 2 may generate the authentication feature 11 designed as an HMAC of the certificate signing request previously concatenated with the service identifier 3 and the random nonce 9 using the shared secret 4 as HMAC key.

Step S10 may comprise a second transmission of a second message 12 from the client device 2 to the service provider device 1 according to a second authenticated transmission procedure. The second message 12 may comprise the authentication feature 11, the nonce, the service request 10, and the service identifier 3.

In the second transmission, the random nonce 9 may be sent in the second message 12 together with the service identifier 3, the authentication feature 11, being the cryptographic hash respectively, the MAC respectively, the authentication tag constructed previously, and the service request 10 to the service provider device 1, e.g., in plain, or by using a, e.g., KEMTLS secured communication channel, or by using a DEM that suits to the KEM using another, independent shared secret 4 that could be either pre-shared or generated on the fly. In essence, the client device 2 authenticates by showing that it was able to successfully decapsulate the received ciphertext from the service provider device 1.

The client device 2 may send the random nonce 9 together with the service identifier 3 "CertRenew", the certificate signing request and the authentication feature 11 designed as the HMAC result to the service provider device 1 in plain.

In a step S11 the service provider device 1 may verify the authentication feature 11 using the shared secret 4.

In a step S12 the service provider device 1 may process the service request 10 and generate a corresponding response 13. The response 13 may comprise the encapsulated shared secret 6, the random nonce 9 and the authentication feature 11.

After the service provider device 1 executes some pre-transformation depending on the choice of communication used by the client device 2, the service provider device 1 may check the authentication feature 11 being the hash, respectively MAC, respectively authentication tag based on the transmitted service request 10, the intended stored service identifier 3, its stored shared secret 4 and the random nonce 9.

If the check succeeds, the service provider device 1 may fulfill the request by generating a response 13 message, whereby the checked hash value respectively MAC respectively authentication tag, the ciphertext for the shared secret 4 generated by the service provider device 1 and the random nonce 9 generated by the client device 2 may get integrated into the third message 14.

The service provider device 1 may check the second message 12 of the client device 2, especially the HMAC result by re-generating it based on previously stored or transmitted data, and if all checks succeed, the service provider device 1 may process the request, here issuance of a new certificate based on the checked certificate signing request, whereby the transmitted HMAC result, the ciphertext belonging to the shared secret 4 generated by the service provider device 1 and the random nonce 9 of the client device 2 may get integrated into the signed response 13, here as X.509v3 public key certificate extension of a new digitally signed X.509v3 public key certificate.

In a step S13 the service provider device 1 may generate a response digital signature signing the response 13, using a signature private key of the service provider device 15 1.

Step S14 may comprise a third transmission of a third message 14 from the service provider device 1 to the client device 2 according to a third authenticated transmission procedure. The third message 14 may comprise the response 13 and the second signature.

The service provider device 1 may finally send the digitally signed response 13 message back to the requesting client device 2, e.g., in plain, or by using a, e.g., KEMTLS secured communication channel, or by using a DEM that suits to the KEM using another, independent shared secret 4 that could be either pre-shared or generated on the fly. The service provider device 1 may send the certificate back to the requestor in plain.

In a step S16 the client device 2 may verify the response digital signature using a signature public key of the service provider device 16 corresponding to the signature private key of the service provider device 1.

The client device 2 may check whether the digital signature of the response 13 message can be successfully validated based on signature public key certificate validation.

The client device 2 may check the digital signature of the X.509v3 public key certificate using full certificate chain validation.

In a step S17 the client device 2 may check the encapsulated shared secret 6, the random nonce 9 and the authentication feature 11 of the response 13.

The client device 2 may check whether the response 13 includes the correct hash value respectively MAC respectively authentication tag, the correct ciphertext belonging to the shared secret 4 used before, and correct random nonce 9 previously generated by the client device 2. The client device 2 may accept the service response 13 based on the outcome of these checks.

The client device 2 may check whether the certificate includes the correct HMAC result, the correct ciphertext belonging to the shared secret 4 used before and the random nonce 9 previously generated and accepts the new public key certificate based on the outcome of this check.

In a step S18 the client device 2 may process the response 13 by the client device 2;

The method proposes a generic interactive KEM-based service request 10 and response 13 protocol for components that are already equipped with public key certificates for KEM public keys such that they can, e.g., execute a mutual authentication scheme and derive session keys to realize a secure channel, cf. [KEMTLS] as an example for the latter.

This means that a general service provider may use the KEM public key certificate of a peer, i.e., that of one of its clients constrained devices, for its service, e.g., a public key certificate renewal service, with or without using such a previously established secure channel.

Thus, the general setup where the method may be used may be an IT/OT service provider together with peers that want to use a KEM-related service of the service provider.

The method offers a corresponding solution for service providers and their peers that is restricted to the following general security capabilities, which can be seen as trusted code base for the service provider and its peers.
a Service provider and all peers: An asymmetric KEM key encapsulation mechanism, e.g., Kyber, Classic McEliece or FrodoKEM, a secure hash algorithm, e.g., SHA2, SHA3 or SHAKE, and optionally a symmetric DEM data encapsulation mechanism, fulfilling the KEM/DEM hybrid encryption paradigm, e.g., based on an AEAD algorithm
b Service provider and all peers: Validation of an asymmetric digital signature, e.g., using Dilithium, Falcon or SPHINCS+
c Service provider only: Generation of an asymmetric digital signature, e.g., using Dilithium, Falcon or SPHINCS+

In the following, it is assumed that all signature public key certificates belong to the same PKI domain, i.e., one single trusted root CA certificate known to the service provider and all peers may be enough for all use cases. Nevertheless, other PKI architectures are possible as well. Prerequisites for the service provider SP are:
A trusted, e.g., self-signed, root CA certificate for the service provider PKI domain
A signature public/private key pair for digital signatures
A digital signature end entity certificate and certificate chain for digital signatures based on the root CA certificate of the PKI
Availability of KEM public key certificates of all relevant peers
Optionally: A KEM public/private key pair
Optionally: A KEM end entity certificate and certificate chain based on the root CA certificate of the PKI for the KEM public key

Prerequisites for the peers that are authorized to use the service of the SP are:
A trusted, e.g., self-signed, root CA certificate for the service provider PKI domain
A KEM public/private key pair
A KEM end entity certificate and certificate chain based on the root CA certificate of the PKI for the KEM public key
An end entity certificate of SP for verifying digital signatures of the service provider based on the root CA certificate of the PKI, optionally also a corresponding certificate chain
Optionally: Availability of a KEM end entity certificate of SP issued within the service provider PKI domain

Correct KEM decapsulations for secure KEMs can with overwhelming probability only be computed by a party that has access to the KEM private key that belongs to the KEM public key that was previously used for encapsulation. Thus, KEM decapsulation may serve for authentication purposes.

A peer that can execute KEM encapsulation can as well generate a random nonce 9, i.e., a value that must not be used repeatedly as KEM encapsulation used here needs generation of random numbers as well.

The effort for security on the client device 2 side peer is restricted to a KEM, a digital signature validation mechanism, and a secure cryptographic hash algorithm respectively HMAC respectively AEAD algorithm. No digital signature generations are required on the client device 2 side peer.

Post-quantum KEM algorithms are typically more efficient than post-quantum digital signature algorithms. The described mechanism can use state-of-the-art post-quantum KEM algorithms currently under standardization at NIST PQC Standardization Project.

Hybrid cryptography can also be supported straightforwardly by using hybrid KEM algorithms e.g., a combination of classic and post-quantum KEM algorithms into the proposed scheme.

It is possible to have object-bound end-to-end security when using the invention in variants without specific secure communication channel establishment. All messages are assumed to be sent over an insecure channel, i.e. no secure channel is assumed between the client device and the service provider device.

## Claims

1. Method of providing a KEM-based service to a client device (2) by a service provider device (1) ,
the method comprising the following steps
- generating a service identifier (3) assigned to the KEM-based service by the service provider device (1);
- generating a shared secret (4) by the service provider device (1);
- encapsulating the shared secret (4) using a public key of the client device (5) by the service provider device (1);
- first transmission of a first message (7) from the service provider device (1) to the client device (2) according to a first authenticated transmission procedure, the first message (7) comprising the encapsulated shared secret (6) and the service identifier (3);
- decapsulating the encapsulated shared secret (6) using a KEM private key of the client device (8) corresponding to the public key of the client device (5) by the client device (2);
- generating a nonce by the client device (2);
- generating a service request (10) corresponding to the service identifier (3) by the client device (2);
- calculating an authentication feature (11) for authenticating the nonce, the service request (10), and the service identifier (3) by the client device (2), the authentication feature (11) based on the shared secret (4);
- second transmission of a second message (12) from the client device (2) to the service provider device (1) according to a second authenticated transmission procedure, the second message (12) comprising the authentication feature (11), the nonce, the service request (10), and the service identifier (3);
- verifying the authentication feature (11) by the service provider device (1) using the shared secret (4);
- processing the service request (10) and generating a corresponding response (13) by the service provider device (1), the response (13) comprising the encapsulated shared secret (6), the nonce and the authentication feature (11);
- generating a response digital signature signing the response (13), using a signature private key of the service provider device (15) by the service provider device (1);
- third transmission of a third message (14) from the service provider device (1) to the client device (2) according to a third authenticated transmission procedure, the third message (14) comprising the response (13) and the second signature;
- verifying the response digital signature using a public key of the service provider device (16) corresponding to the signature private key of the service provider device (1) by the client device (2);
- checking the encapsulated shared secret (6), the nonce and the hash of the response (13) by the client device (2);
- processing the response (13) by the client device (2).

2. Method according to claim 1,
the first transmission of the first message (7) according to the first authenticated transmission procedure comprising the following steps:
- generating a initial digital signature signing the encapsulated shared secret (6) and the service identifier (3), using the signature private key of the service provider device (15) by the service provider device (1);
- sending the first message (7) to the client device (2) by the service provider device (1), the first message (7) comprising the initial digital signature;
- receiving the first message (7) by the client device (2);
- verifying the initial digital signature using the public key of the service provider device (16) by the client device (2).

3. Method according to any one of the preceding claims, wherein the authentication feature (11) is a hash value of the shared secret (4), the nonce, the service request (10), and the service identifier (3).

4. Method according to any one of the preceding claims, wherein the authentication feature (11) is a keyed-hash message authentication code, a MAC and/or a CAM of the nonce, the service request (10), and the service identifier (3) based on the shared secret (4).

5. Method according to any one of the preceding claims, wherein the authentication feature (11) is an authentication tag of the nonce, the service request (10), and the service identifier (3) using an AEAD scheme based on the shared secret (4).

6. Method according to any one of the preceding claims, wherein the first authenticated transmission procedure and/or the second authenticated transmission procedure and/or the third authenticated transmission procedure is configured as a KEMTLS transmission procedure.

7. Method according to any one of the preceding claims, wherein the first authenticated transmission procedure and/or the second authenticated transmission procedure and/or the third authenticated transmission procedure is configured as a KEM/DEM transmission procedure using a second shared secret (4).

8. Method according to any one of the preceding claims, comprising the step of:
- transmission of an initial request message from the client device (2) to the service provider device (1).

9. Method according to any one of the preceding claims, comprising the step of:
- initiating the method by the service provider device (1).

10. Service provider device (1), configured to
- generate a service identifier (3) assigned to a KEM-based service;
- generate a shared secret (4);
- encapsulate the shared secret (4) using a public key of the client device (5);
- send a first message (7) to the client device (2) according to a first authenticated transmission procedure, the first message (7) comprising the encapsulated shared secret (6) and the service identifier (3);
- receive a second message (12) from the client device (2) according to a second authenticated transmission procedure, the second message (12) comprising an authentication feature (11), a nonce, a service request (10), and the service identifier (3);
- verify the authentication feature (11) using the shared secret (4);
- process the service request (10) and generate a corresponding response (13), the response (13) comprising the encapsulated shared secret (6), the nonce and the authentication feature (11);
- generate a response digital signature signing the response (13), using a signature private key of the service provider device (15);
- send a third message (14) to the client device (2) according to a third authenticated transmission procedure, the third message (14) comprising the response (13) and the second signature.

11. Client device (2), configured to
- receive a first message (7) from a service provider device (1) according to a first authenticated transmission procedure, the first message (7) comprising the encapsulated shared secret (6) and the service identifier (3);
- decapsulate the encapsulated shared secret (6) using a KEM private key of the client device (8) corresponding to a public key of the client device (5);
- generate a nonce;
- generate a service request (10) corresponding to the service identifier (3);
- calculate an authentication feature (11) for authenticating the nonce, the service request (10), and the service identifier (3), the authentication feature (11) depending on the shared secret (4);
- send a second message (12) to the service provider device (1) according to a second authenticated transmission procedure, the second message (12) comprising the authentication feature (11), the nonce, the service request (10), and the service identifier (3);
- receive a third message (14) from the service provider device (1) according to a third authenticated transmission procedure, the third message (14) comprising the response (13) and the second signature;
- verify the response digital signature using a public key of the service provider device (16) corresponding to the signature private key of the service provider device (1);
- check the encapsulated shared secret (6), the nonce and the hash of the response (13);
- process the response (13).

12. System, comprising a service provider device (1) according to claim 10 device and a client device (2) according to claim 11.

13. Computer program which is directly loadable into a memory of an electronic computing device (17), comprising program code for executing the steps of the method performed by the service provider device (1) according to any one of the claims 1 to 9 and/or to perform the steps of the method performed by the client device (2) according to any one of the claims 1 to 9 when the program is executed in the electronic computing device (17).

14. Storage medium having electronically readable control information stored on it comprising at least one computer program according to claim 13 and configured to perform the steps of the method performed by the service provider device (1) according to any one of the claims 1 to 9 and/or to perform the steps of the method performed by the client device (2) according to any one of the claims 1 to 9 when the storage medium is used in a computing device (17).
